# EUROPEAN PATENT SPECIFICATION

(11) **EP 3 561 505 B1**
(45) Date of publication and mention of the grant of the patent: **18.12.2024**
(21) Application number: 16924672.5
(22) Date of filing: 22.12.2016
(51) Int. Cl.: G01N 30/60

(54) **COLUMN AND EXCHANGE DEVICE**
SÄULE UND AUSTAUSCHVORRICHTUNG
COLONNE ET DISPOSITIF D'ÉCHANGE

(43) Date of publication of application: 30.10.2019
(73) Proprietor: Hitachi High-Tech Corporation, Minato-ku Tokyo 105-6409 (JP)
(72) Inventor: NAKAGAWA Hiroaki, Tokyo 105-8717 (JP); SAKAZUME Taku, Tokyo 105-8717 (JP); ITO Shinya, Tokyo 105-8717 (JP); SHISHIKA Tsukasa, Tokyo 105-8717 (JP)
(74) Representative: MERH-IP Matias Erny Reichl Hoffmann Patentanwälte PartG mbB
(86) International application number: PCT/JP2016/088272
(87) International publication number: WO 2018/116432

(56) References cited:
- WO-A1-2014/080925
- WO-A2-01/06166
- JP-A- 2007 199 041
- JP-A- 2014 095 700
- JP-A- H02 238 363
- JP-A- H02 238 363
- JP-A- H11 174 036
- JP-A- S58 184 388
- JP-A- S59 144 887
- JP-U- H0 355 984
- JP-U- H0 478 554
- JP-U- S61 154 561
- US-A1- 2002 070 547
- US-A1- 2007 084 982
- US-A1- 2008 085 507
- US-A1- 2010 154 207
- US-B1- 6 193 286

## Description

### Technical Field

The present invention provides a column exchange device and a column suitable for this column exchange device.

### Background Art

Liquid chromatography (LC) is an analysis device widely used in fields such as food, chemistry, pharmacy, and clinical chemistry. The liquid chromatography uses different degrees of interaction with a solid surface of an analytical target and a contaminant which are mixed in a mobile phase of a liquid so as to separate the analytical target and the contaminant. Liquid chromatography with high performance includes high-performance liquid chromatography (HPLC) and ultra high-performance liquid chromatography (UHPLC). In these devices, pressure of several MPa to 100 MPa or more is applied to a column. In Patent Literature 1, a column is joined by screwing in order to withstand the pressure. A screw part between an end fitting and a column body is cut with a male screw on the column body, and is directly jointed to a female screw on the end fitting. In addition, the end fitting is cut with a female screw as a screw part to connect to a pipe on an opposite side of the column body. Furthermore, PTL 2 discloses a column and an attachment mechanism therefor comprising a column which includes, in an inner peripheral part at each free end thereof, a threaded hole having a thread groove and attachment members, which are attached by being screwed into each free end of the column, wherein replacement of the column is performed in accordance with the degree of deterioration thereof. Eventually, PLT 3 discloses devices and methods for connecting tubes to receiving fittings.

Further, column exchange is necessary in HPLC due to changes or the like of separation targets and column solids.

### Prior Art Literature

### Patent Literature

PTL 1: JP-A-2015-114293
PTL 2: JP H 02 238 363 A
PTL 3: US 6 193 186 B1

### Summary of Invention

### Technical Problem

In recent years, although a component which is a manually tightened column exchange in HPLC has also emerged, attention has to be paid so as to ensure no gap between a tube and a column when exchanging a column. A screw of a to-be-removed column is removed and a screw of a to-be-attached column is tightened by using a tool such as a spanner in column exchange. HPLC requires expertise in operation and data processing, and it is not particularly difficult for such an operator to operate the column exchange. However, since attention has to be paid to ensure no gap between the tube and the column when attaching the column as described above, in column exchange, it is necessary to fix the column body and to sequentially remove both ends of the column body one by one as in Patent Literature 1.

When it is necessary to automatically perform column exchange in a long-term and continuous operation of HPLC or the like, a method of switching a flow path by a valve is taken. Two columns can be exchanged when two flow paths and six valves are used and six columns can be exchanged when one flow path and six valves are used. However, the method of using a valve limits the number of exchangeable columns and further has a problem of low separating performance by passing through the valve.

The invention provides a column exchange device for simpler column exchange and a column suitable for this column exchange device.

### Solution to Problem

The above-mentioned problem is solved by providing a column exchange mechanism as set out in the appended set of claims. Preferred embodiments of the present invention are described in the dependent claims.

### Advantageous Effect

The invention has an effect that work of column exchange can be reduced and long-term operation is possible. Further, when column exchange is automated, column exchange can be automated with a simple device configuration.

### Brief Description of Drawings

[Fig. 1] Fig. 1 is an overall view of an embodiment.
[Fig. 2] Fig. 2 illustrates a component configuration of a column and a joint portion.
[Fig. 3] Fig. 3 is a schematic diagram illustrating attachment and detachment of the column.
[Fig. 4] Fig. 4 illustrates a flow of attachment and detachment of the column.
[Fig. 5] Fig. 5 illustrates a component configuration of a reverse thread column and a joint portion.
[Fig. 6] Fig. 6 is a schematic diagram illustrating attachment and detachment of the reverse thread column.
[Fig. 7] Fig. 7 illustrates a component configuration of a column and a joint portion.
[Fig. 8] Fig. 8 is a schematic diagram illustrating attachment and detachment of the column.

### Description of Embodiments

An embodiment of the invention will be described below with reference to drawings.

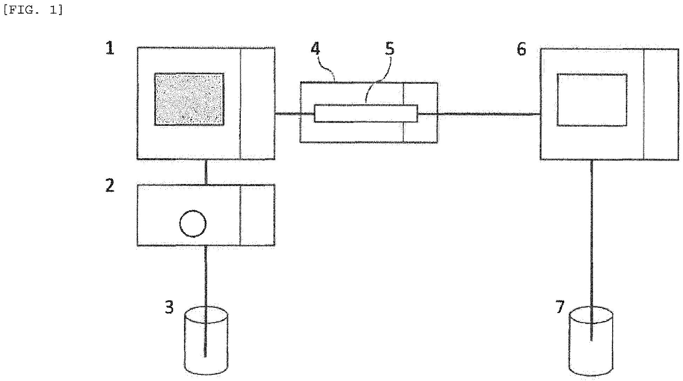

Fig. 1 is an overall view of the embodiment. A device includes a sample introducing device 1, a liquid feeding pump 2, a mobile phase container 3, a column thermostatic chamber 4, a column 5, a detector 6, and a waste liquid container 7, each of which is connected by a tube. The configuration such as the number of the mobile phase container 3 and the liquid feeding pump 2, a type of the detector 6, and presence or absence of the column thermostatic chamber 4 can be changed according to purposes. First, a mobile phase in the mobile phase container 3 is fed to the liquid feeding pump 2. An analytical sample is injected into the column 5 by the sample introducing device 1 in liquid feeding. The injected sample is separated in the column 5 and is kept at a certain temperature by the column thermostatic chamber 4, since the separation is affected by temperature. The separated sample is detected by the detector 6 and discharged to the waste liquid container 7. The detector 6 includes an ultraviolet visible light spectrophotometer, a diode array detector, a fluorescence detector, a mass spectrometer, and the like. A column has a structure that contains a separating agent of solid fine particles in a cylindrical container and has two openings which are an entrance and an exit of the mobile phase at both ends. Solid particles are made small to improve separating performance, and flow velocity of the mobile phase is increased to shorten separating time, and both of them operate in a way to increase pressure in the column. In order to automatically exchange a screw column, a device and a column are provided to perform a series of operations including: 1. disconnecting a pipe at an exit side and an entrance side of a to-be-attached column (column 1); 2. moving the column 1; 3. moving next to-be-attached column (column 2) to a predetermined position (a position where the column 1 is located); and 4. connecting a pipe at an exit side and an entrance side of the column 2.

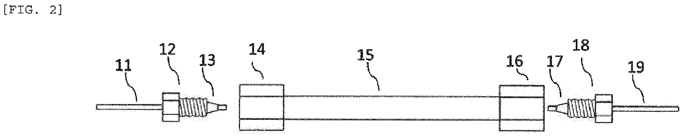

Configurations of components of a column and a connecting part thereof are illustrated in Fig. 2. The column includes a column tube 15 and column ends 14 and 16 located at both ends of the column tube 15. The column tube 15 is internally filled with filler which performs separation. The column ends 14 and 16 are cut with inward-facing screws so that a space where ferrules 13 and 17 and a part of pipes 11 and 19 enter is ensured. The connecting part of the column includes the pipes 11 and 19, screws 12 and 18, and ferrules 13 and 17. The pipes 11 and 19 pass through an interior of the screws 12 and 18 and the ferrules 13 and 17. The screws 12 and 18 are divided into a holding part and an outward-facing screw part, and are provided with a through hole through which the pipes 11 and 19 pass. The outward-facing screw part can be tightened with an inward-facing screw of the column ends 14 and 16 and is deformed so as to seal a gap between the pipes 11 and 19 that pass through the interior of the screw part and the inward-facing screw of the column ends 14 and 16. The ferrules 13 and 17 are components that press the pipes 11 and 19 and are internally provided with through holes through which the pipes 11 and 19 pass. A filter called a frit is installed between outward-facing screws of the screws 12 and 18 and the column ends 14 and 16 so that the filler inside the column tube 15 does not leak. In this embodiment, an entrance side is where a solution is injected into the column from the pipe 11 to 14 of the column and an exit side is where the solution flows out from 16 to 19 of the column.

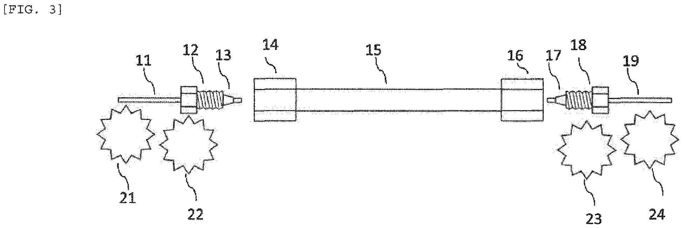

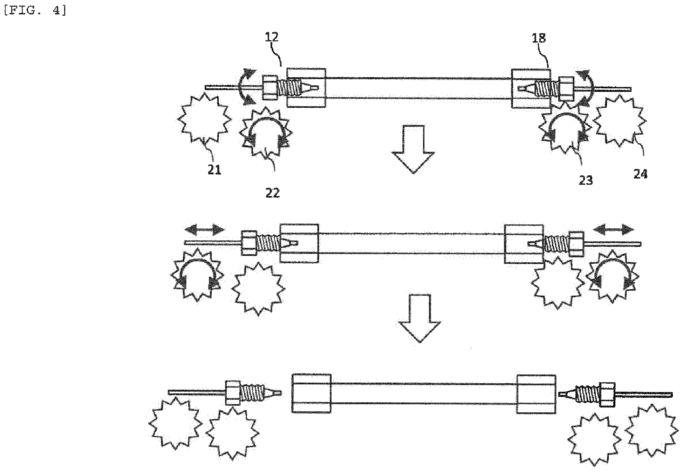

Generally, screws are all right screws. That is, in case that the screws 12 and 18 are right screws, when the column is removed, the screw 12 is rotated from bottom to top at a near side, the column end 14 is rotated from top to bottom at a near side, the column end 16 is rotated from bottom to top at a near side and the screw 18 is rotated from top to bottom at a near side. When the column is attached, a reverse rotation is performed. The screw 12 and the column end 14 may both be moved and the column end 16 and the screw 18 may both be moved, or only one of them may be moved, for example, the column end 14 may be fixed and only the screw 12 may be moved. Although the column end 14 and the column end 16 rotate reversely, the entrance side and the exit side cannot be simultaneously removed or attached since the column end 14 and the column end 16 are integrated. When the column is rotated, a twist occurs in the pipe at the exit side when the entrance side is removed or attached. Therefore, when attempting to automate operation of attaching and detaching the column by using a motor, as illustrated in Fig. 3, it is necessary to fix the column tube 15, and to provide a motor 22 and a motor 23 that rotate the screw 12 and the screw 18 reversely, and a motor 21 and a motor 24 that cause the screw 12 and the screw 18 to be close to or apart from the column. Fig. 4 is used here to illustrate a flow of attaching and detaching the column. When the column is removed from the connecting part, first, the screws 12 and 18 are rotated and removed by using the motors 22 and 23. Here, when the screws 12 and 18 are both right screws, one of the screws has to be removed since rotating directions of removing are different. Next, a connecting part at the entrance side and a connecting part at the exit side are separated from the column by using the motors 21 and 24. This flow allows the column to be removed from the connecting part. Further, when the column is attached to the connecting part, the flow in Fig. 4 is performed from bottom to top. First, the connecting part at the entrance side and the connecting part at the exit side are attached to the column by using the motor 21 and the motor 24. Next, the screws 12 and 18 are rotated and tightened by using the motors 22 and 23.

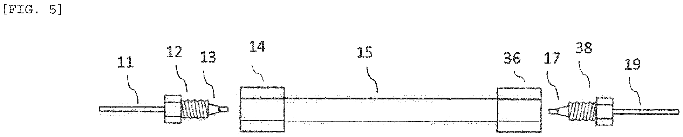

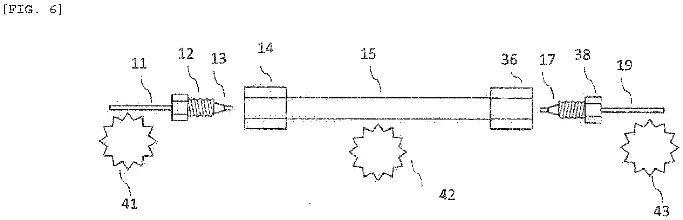

Here, in one form of the embodiment, either one of the screw 12 and the column end 14 or the column end 16 and the screw 18 is a left screw. That is, the relationship between the screw 12 of the connecting part at the entrance side and the screw 18 of the connecting part at the exit side is a relationship of reverse screws whose rotating and closing direction are reverse. Further, inward-facing threads provided in the column ends at both ends of the column are reverse threads. As illustrated in Fig. 5, in case that a column end 36 and a screw 38 of the connecting part at the exit side are left screws. When the column is removed, the screw 12 is rotated from bottom to top at a near side, the column end 14 is rotated from top to bottom at a near side, the column end 36 is rotated from top to bottom at a near side, and the screw 38 is rotated form bottom to top at a near side. When the column is attached, a reverse rotation is performed. The column end 14 and the column end 36 at both ends of the column are attached and detached respectively by the same rotation, the column is rotated from top to bottom at a near side, and the column can be easily removed by one motor when the entrance side and the exit side are removed simultaneously when the screw 12 and the screw 38 are fixed so as not to be rotated. Fig. 6 is a schematic view illustrating a motor when attachment and detachment of the column is automated. First, the column tube 15 in Fig. 6 is rotated by a motor 42, and an entrance connecting part and an exit connecting part are fixed by a fixture or the like so as not to be rotated. Although motors 41 and 43 may be used to cause the entrance connecting part and the exit concocting part to be close to or apart from the column, attachment and detachment is possible by only one of the motor 41 and the motor 43 when the column can move to right and left. Fig. 5 is different from Fig. 3, in which right screws are used at both ends of the column, in that the number of motors can be reduced when a reverse screw column is used at both ends of the column. Further, in this way, it is possible to simplify the configuration of the device and to provide a user friendly device. Further, the column cannot be installed when the exit side and the entrance side of the column are disposed reversely by reversing the screw at the entrance side and the screw at the exit side. Therefore, the device also has an effect of preventing a connection to the column from being in a reverse column direction. Thus, the device is capable of always filling the column in one direction, flowing in the same direction during analyzing, and obtaining a result with high reproducibility.

In addition, although the embodiment describes a configuration in which a screw part is provided in the connecting part and inward-facing threads are provided in the column, the configuration may also be that the screw part is provided at a side of the column and the inward-facing threads are provided at a side of the connecting part.

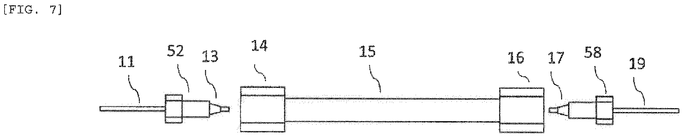

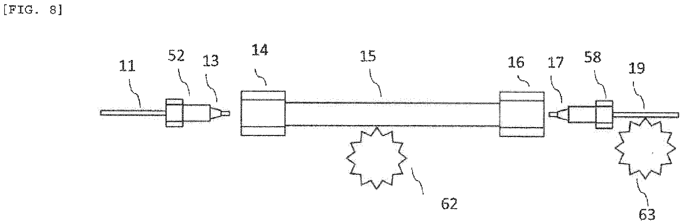

In another form of the present embodiment, threads of screws are removed and sealing is performed by pressing. This embodiment, however, does not fall under the scope of the appended claims, and is only to be considered merely as an example suitable for understanding the invention. As illustrated in Fig. 7, in case that the threads of the screws are removed to be a holding part 52 and a holding part 58, a column may be attached and detached by moving in a left-right direction only. As illustrated in Fig. 8, when attempting to automate attachment and detachment of the column by using a motor, the attachment and detachment can be performed by using a motor 63 that causes the holding part 58 at the exit side to be close or apart and a motor 62 that moves the column tube 15 to left and right.

Then the following additional functions can be added to confirm that column exchange is correctly performed.

The column 2 is provided with a cap in an exit and an entrance in storage, which can avoid drying inside the column.

The column 1 detects that there is no predetermined movement and displays a warning due to a reason, for example, that screws of the column 1 are fixed and cannot be removed in column exchange. Thus, an operator can know malfunction of the device appropriately and deal with the device smoothly.

In case that the column 2 does not reach certain pressure after column exchange, a liquid feeding pump is stopped when the column is not correctly connected. In this case, since a mobile phase is often leaked from a column connecting part, it is possible to prevent analysis from being incorrectly performed while avoiding the device being contaminated by the mobile phase.

Further, actions of removing and attaching the column 2 again are repeated after the pump is stopped. Thus, it is possible to automatically recover and continue the analysis.

In case that a leak sensor is activated after the column exchange, the pump is stopped when the column is not correctly connected.

Further, actions of removing and attaching the column 2 again are repeated after the pump is stopped. Thus, it is possible to automatically recover and continue the analysis.

Individual management of the column is performed in the column by an IC tag, a microchip, a bar code, or the like. Thus, by referring to previous data, it is possible to know more accurately a peak elution position, and it is easy to detect the above analysis.

When there is a history that the attached column 2 was used, a warning is displayed when pressure does not fall within a certain range based on use pressure of the attached column 2.

When there is no history that the attached column 2 was used, pressure range data which is set according to a column type, a column size and the like is referred to, and a warning is displayed when the pressure range data does not fall within a certain range. Thus, abnormality of the column is detected in an early stage, presentation of wrong analysis data is avoided, and further time loss due to wrong analysis is reduced.

After the column 2 is attached, a specified analytical compound is analyzed to confirm that an analysis result is within a specification after the mobile phase flows for a certain period of time. Thus, abnormality of the column is detected in an early stage, presentation of wrong analysis data is avoided, and further time loss due to wrong analysis is reduced.

Further, when the analysis result is out of the specification, another column is exchanged again. Thus, it is possible to automatically recover and continue the analysis .

The column exchange is performed so that the pressure is higher than a specified value. When the pressure is higher than the specified value even after the column exchange, an indication that it is necessary to maintain a device, such as clogging up of a flow path other than the column, is displayed to give a warning. Thus, an operator can know malfunction of the device appropriately and deal with the device smoothly.

The analysis starts after the attached column 2 is confirmed to reach a certain temperature, or after a certain temperature is confirmed to be reached and maintained for a certain period of time, which improves reproducibility of elution.

When the column 1 is removed, the column is removed after internal pressure of the column is lowered by being placed for a certain period of time after liquid feeding of the mobile phase is stopped. Thus, an internal pressure change of the column can be alleviated and deterioration of the column due to a sudden pressure change can be controlled.

Further, here the internal pressure of the column is monitored by a pressure meter, and the column is removed after the column pressure is lowered. Thus, the internal pressure change of the column can be accurately alleviated, and deterioration of the column due to a sudden pressure change can be controlled.

Individually management of the column is performed by the IC tag, the bar code, or the like. When a removed column is determined to be reusable according to an analysis result, the column is stored, and when a column is determined that the column cannot be reused and the column has been removed, the column is discarded, which promotes reuse of the column.

Further, a cap is installed on an exit and an entrance of a column that is determined to be reusable. Thus, deterioration due to drying of the column can be controlled.

When the column is discarded and the column was used at a temperature of 50 degrees or higher, a state in which a person should not touch the column directly is maintained until the temperature of the column is lowered, which is detected by a temperature sensor, or until it is ensured that the column is placed for a certain period of time. Thus, an operator can be prevented from being burnt.

When the performance of column 1 in use is low and is predicated to be out of the specification, temperature control of the column 2 which is attached next is started before exchange so as to shorten conditioning time of an exchanged column. Thus, loss of analysis time due to column exchange can be reduced.

When the column exchange is scheduled by an analysis sequence, temperature control of column 2 which is attached next is started before exchange so as to shorten conditioning time of the exchanged column. Thus, loss of analysis time due to column exchange can be reduced.

Liquid chromatography automatically performs a series of operations including: 1. disconnecting a pipe at an exit side and an entrance side of a to-be-attached column (column 1); 2. moving the column 1; 3. moving a next to-be-attached column (column 2) to a predetermined position (a position where the column 1 is located) ; and 4. connecting a pipe at an exit side and an entrance side of the column 2.

When a column connected by screws is used, the liquid chromatography automatically performs a series of operations including: 1. disconnecting screws of a pipe at an exit side and an entrance side of a to-be-attached column (column 1); 2. moving the column 1; 3. moving a next to-be-attached column (column 2) to a predetermined position (a position where the column 1 is located); and 4. tightening and connecting screws of a pipe at an exit side and an entrance side of the column 2. As illustrated in the drawings, the exit side and the entrance side of the column are provided with a motor that rotates a screw of a connecting pipe and a motor that causes a connecting pipe to be close to or apart from the column, and operation of exchanging the column 1 and the column 2 is performed by a total of 5 motors that move the column 1 and the column 2.

When a column connected by screws is used and screws at both ends of the column are right screws and left screws, the liquid chromatography automatically performs a series of operations including: 1. disconnecting screws of a pipe at an exit side and an entrance side of a to-be-attached column (column 1); 2. moving the column 1; 3. moving a next to-be-attached column (column 2) to a predetermined position (a position where column 1 is located) ; and 4. tightening and connecting screws of a pipe at an exit side and an entrance side of the column 2. As illustrated in the drawings, the exit side and the entrance side of the column are provided with a motor that rotates the column and a motor that causes a connecting pipe to be close to or apart from the column, and operation of exchanging the column 1 and the column 2 is performed by a total of 3 motors that move the column 1 and the column 2.

When a column connected by crimping is used, the liquid chromatography automatically performs a series of operations including: 1. moving and disconnecting a pipe that is connected to an exit side and an entrance side of a to-be-attached column (column 1); 2. moving the column 1; 3. moving a next to-be-attached column (column 2) to a predetermined position (a position where the column 1 is located); and 4. pressing and connecting a pipe at an exit side and an entrance side of the column 2. As illustrated in the drawings, one side of the column is provided with a motor that caused a connecting pipe to be close to or apart from the column, and operation of exchanging the column 1 and the column 2 is performed by a total of 2 motors that move the column 1 and the column 2.

The invention provides a device that attaches and detaches a column in which one end of the column is a reverse screw. The device includes a motor that rotates the column, and a screw at a pipe side does not rotate but is fixed so as to be moved in a parallel direction. A pipe at the entrance side and the exit side can be attached and detached at the same time by rotation of the motor. The motor, to which a torque sensor internally is attached, is provided with a mechanism that stops rotation of the motor when attachment and detachment is ended when the motor is tightened with certain strength or when certain strength has not been reached for a certain period of time.

The invention provides a device that attaches and detaches a column in which one end of the column is a reverse screw. The device includes a motor that rotates the column, and a screw at a pipe side does not rotate but is fixed so as to be moved in a parallel direction. Further, when the column is installed, a screw at the entrance side is set to be contacted before a screw at the exit side to start a connection. Accordingly, a connection at the entrance side is stronger than that at the exit side. In HPLC analysis, pressure is generated when the mobile phase passes through the column filler, and the entrance side is exposed to higher pressure than the exit side. The risk of liquid leakage can be reduced since the connection at the entrance side is stronger.

The invention provides a device that attaches and detaches a column in which one end of the column is a reverse screw. The device is provided with a motor that rotates an outward-facing screw at an entrance side, the column is fixed to move in a parallel direction, and a screw at an exit side is fixed so as not to rotate or move in the parallel direction. Here, the column can be arbitrarily set to rotate or not. Further, when the column is installed, the screw at the entrance side is set to be contacted before the screw at the exit side to start a connection. First, the column is fixed so as not to rotate, and the entrance side is connected by rotating the screw at the entrance side. When certain strength is reached, a connection at the exit side is performed by moving the column horizontally to the exit side so that the column can be rotated. The connection at the exit side is ended at a torque lower than a rotation torque of a motor that ends the connection at the entrance side. When the column is removed, the column is in a rotating state and a motor connected to an outward-facing screw at the entrance side is rotated reversely. Since the exit side is tightened with a lower torque than the entrance side, the exit side is removed firstly, and the column rotates idly. A state in which the torque is lower than a certain value for a certain period of time is detected, and a fixture or the like is provided for fixing so as to stop the rotation of the column. Accordingly, a force of the motor is used to remove the screw at the entrance side, the action of ending the removal of the column is detected by detecting the state in which the torque is lower than a certain value for a certain period of time, and then the motor is stopped.

## Claims

1. A column exchange mechanism, comprising:
a column (5) having inward-facing threads at both ends (14, 16) thereof; and
a first joining part (12) and a second joining part (18) for fixing the ends (14, 16) of the column (5), wherein
the first joining part (12) and the second joining part (18) have screw parts (13, 17) that are joined to the ends (14, 16) of the column (5), wherein either one of the first joining part (12) and the end (14) of the column (5) or the end (16) of the column (5) and the second joining part (18) is a left hand threaded joining part,
**characterized in that**:
a first direction, in which a screw of the screw part (13) of the first joining part (12) is to be turned to tighten the same, and a second direction, in which a screw of the screw part (17) of the second joining part (18) is to be turned to tighten, are opposite of one another, wherein the screw of the screw part (13) of the first joining part (12) is set to contact the end (14) of the column (5) before the screw of the screw part (17) of the second joining part (18) is contacting the end (16) of the column (5), and wherein the first joining part (12) and the second joining part (18) are joined to the ends (14, 16) through a rotation of the column (5).

2. The column exchange mechanism according to claim 1, wherein
a relationship between the inward-facing threads at both ends (14, 16) of the column (5) is that the directions in which the threads are to be turned to tighten the same are opposite directions.

3. The column exchange mechanism according to claim 2, further comprising:
a motor (43) configured to rotate the column (5); and
a fixation tool adapted to fix the first joining part (12) and/or the second joining part (18).

4. The column exchange mechanism according to claim 3, further comprising:
a motor adapted to cause the first joining part (12) and/or the second joining part (18) to come close to the column (5).

5. The column exchange mechanism according to claim 4, further comprising:
a cap that is attached to the column (5).

6. The column exchange mechanism according to claim 4, wherein the column exchange mechanism is adapted to cause a warning to be displayed when the first joining part (12) and/or the second joining part (18) are/is fixed and not deviated from the column (5) during column exchange.

7. The column exchange mechanism according to claim 4, wherein
a liquid feeding pump (2) is configured to be stopped when pressure in a column after column exchange does not reach predetermined pressure.

8. The column exchange mechanism according to claim 4, wherein
an identification mark is added to the column, and previous column data is referred to.

9. The column exchange mechanism according to claim 8, wherein
when there is use history in the column, the column exchange mechanism is adapted to cause a warning to be displayed when pressure does not fall in a predetermined range based on use pressure of the column.

10. The column exchange mechanism according to claim 8, wherein
when there is no use history in a column, the column exchange mechanism is adapted to cause a warning to be displayed when pressure does not fall in a predetermined range by referring to pressure range data which is set based on a column type and a column size.

11. The column exchange mechanism according to claim 4, wherein
the column exchange mechanism is adapted to cause an analysis to be started after confirming that temperature in the column (5) reaches a predetermined temperature or that the temperature in the column (5) reaches a predetermined temperature and is maintained for a predetermined time.

12. The column exchange mechanism according to claim 4, wherein
pressure in the column (5) is monitored with a pressure meter, and the column is detached after the column pressure is reduced.

## Patentansprüche

1. Säulenaustauschmechanismus, umfassend:
eine Säule (5) mit nach innen gerichteten Gewinden an beiden Enden (14, 16) davon; und
ein erstes Verbindungsteil (12) und ein zweites Verbindungsteil (18) zum Befestigen der Enden (14, 16) der Säule (5), wobei
das erste Verbindungsteil (12) und das zweite Verbindungsteil (18) Schraubenteile (13, 17) aufweisen, die mit den Enden (14, 16) der Säule (5) verbunden sind, wobei entweder das erste Verbindungsteil (12) oder das Ende (14) der Säule (5) oder das Ende (16) der Säule (5) und das zweite Verbindungsteil (18) ein Verbindungsteil mit Linksgewinde ist,
**dadurch gekennzeichnet, dass**:
eine erste Richtung, in der eine Schraube des Schraubenteils (13) des ersten Verbindungsteils (12) gedreht werden soll, um sie anzuziehen, und eine zweite Richtung, in der eine Schraube des Schraubenteils (17) des zweiten Verbindungsteils (18) gedreht werden soll, um sie anzuziehen, einander entgegengesetzt sind, wobei die Schraube des Schraubenteils (13) des ersten Verbindungsteils (12) so eingestellt ist, dass sie das Ende (14) der Säule (5) berührt, bevor die Schraube des Schraubenteils (17) des zweiten Verbindungsteils (18) das Ende (16) der Säule (5) berührt, und wobei das erste Verbindungsteil (12) und das zweite Verbindungsteil (18) durch eine Drehung der Säule (5) mit den Enden (14, 16) verbunden sind.

2. Säulenaustauschmechanismus nach Anspruch 1, wobei
eine Beziehung zwischen den nach innen gerichteten Gewinden an beiden Enden (14, 16) der Säule (5) darin besteht, dass die Richtungen, in denen die Gewinde gedreht werden sollen, um sie anzuziehen, entgegengesetzte Richtungen sind.

3. Säulenaustauschmechanismus nach Anspruch 2, ferner umfassend:
einen Motor (43), der konfiguriert ist, um die Säule (5) zu drehen; und
ein Befestigungswerkzeug, das angepasst ist, um das erste Verbindungsteil (12) und/oder das zweite Verbindungsteil (18) zu befestigen.

4. Säulenaustauschmechanismus nach Anspruch 3, ferner umfassend:
einen Motor, der angepasst ist, um das erste Verbindungsteil (12) und/oder das zweite Verbindungsteil (18) zu veranlassen, sich der Säule (5) anzunähern.

5. Säulenaustauschmechanismus nach Anspruch 4, ferner umfassend:
eine Kappe, die an der Säule (5) angebracht ist.

6. Säulenaustauschmechanismus nach Anspruch 4, wobei der Säulenaustauschmechanismus angepasst ist, um zu veranlassen, dass eine Warnung angezeigt wird, wenn das erste Verbindungsteil (12) und/oder das zweite Verbindungsteil (18) befestigt sind/ist und während des Säulenaustauschs nicht von der Säule (5) abweichen.

7. Säulenaustauschmechanismus nach Anspruch 4, wobei
eine Flüssigkeitszufuhrpumpe (2) konfiguriert ist, um gestoppt zu werden, wenn der Druck in einer Säule nach dem Säulenaustausch einen vorbestimmten Druck nicht erreicht.

8. Säulenaustauschmechanismus nach Anspruch 4, wobei
eine Identifikationsmarkierung zu der Säule hinzugefügt wird und auf vorherige Säulendaten Bezug genommen wird.

9. Säulenaustauschmechanismus nach Anspruch 8, wobei
wenn ein Verwendungsverlauf in der Säule vorliegt, der Säulenaustauschmechanismus angepasst ist, um zu veranlassen, dass eine Warnung angezeigt wird, wenn der Druck nicht in einen vorbestimmten Bereich fällt, basierend auf dem Verwendungsdruck der Säule.

10. Säulenaustauschmechanismus nach Anspruch 8, wobei
wenn kein Verwendungsverlauf in einer Säule vorliegt, der Säulenaustauschmechanismus angepasst ist, um zu veranlassen, dass eine Warnung angezeigt wird, wenn der Druck nicht in einen vorbestimmten Bereich fällt, indem auf Druckbereichsdaten Bezug genommen wird, die basierend auf einem Säulentyp und einer Säulengröße eingestellt sind.

11. Säulenaustauschmechanismus nach Anspruch 4, wobei
der Säulenaustauschmechanismus angepasst ist, um zu veranlassen, dass eine Analyse gestartet wird, nachdem bestätigt wurde, dass die Temperatur in der Säule (5) eine vorbestimmte Temperatur erreicht oder dass die Temperatur in der Säule (5) eine vorbestimmte Temperatur erreicht und für eine vorbestimmte Zeit aufrechterhalten wird.

12. Säulenaustauschmechanismus nach Anspruch 4, wobei
der Druck in der Säule (5) mit einem Druckmesser überwacht wird und die Säule gelöst wird, nachdem der Säulendruck reduziert wurde.

## Revendications

1. Mécanisme d'échange de colonne, comprenant :
une colonne (5) ayant des filets tournés vers l'intérieur au niveau de ses deux extrémités (14, 16) ; et
une première partie de jonction (12) et une seconde partie de jonction (18) pour fixer les extrémités (14, 16) de la colonne (5), dans lequel
la première partie de jonction (12) et la seconde partie de jonction (18) ont des parties de vis (13, 17) qui sont jointes aux extrémités (14, 16) de la colonne (5), dans lequel l'une ou l'autre de la première partie de jonction (12) et de l'extrémité (14) de la colonne (5) ou de l'extrémité (16) de la colonne (5) et de la seconde partie de jonction (18) est une partie de jonction filetée à gauche,
**caractérisé en ce que** :
une première direction, dans laquelle une vis de la partie de vis (13) de la première partie de jonction (12) doit être tournée pour serrer celle-ci, et une seconde direction, dans laquelle une vis de la partie de vis (17) de la seconde partie de jonction (18) doit être tournée pour serrer, sont opposées l'une à l'autre, dans lequel la vis de la partie de vis (13) de la première partie de jonction (12) est réglée pour entrer en contact avec l'extrémité (14) de la colonne (5) avant que la vis de la partie de vis (17) de la seconde partie de jonction (18) n'entre en contact avec l'extrémité (16) de la colonne (5), et dans lequel la première partie de jonction (12) et la seconde partie de jonction (18) sont jointes aux extrémités (14, 16) par une rotation de la colonne (5).

2. Mécanisme d'échange de colonne selon la revendication 1, dans lequel
une relation entre les filets tournés vers l'intérieur au niveau des deux extrémités (14, 16) de la colonne (5) est que les directions dans lesquelles les filets doivent être tournés pour serrer ceux-ci sont des directions opposées.

3. Mécanisme d'échange de colonne selon la revendication 2, comprenant en outre :
un moteur (43) configuré pour faire tourner la colonne (5) ; et
un outil de fixation adapté pour fixer la première partie de jonction (12) et/ou la seconde partie de jonction (18).

4. Mécanisme d'échange de colonne selon la revendication 3, comprenant en outre :
un moteur adapté pour amener la première partie de jonction (12) et/ou la seconde partie de jonction (18) à se rapprocher de la colonne (5).

5. Mécanisme d'échange de colonne selon la revendication 4, comprenant en outre :
un capuchon qui est fixé à la colonne (5).

6. Mécanisme d'échange de colonne selon la revendication 4, dans lequel le mécanisme d'échange de colonne est adapté pour amener un avertissement à être affiché lorsque la première partie de jonction (12) et/ou la seconde partie de jonction (18) est/sont fixée(s) et n'est pas déviée de la colonne (5) pendant l'échange de colonne.

7. Mécanisme d'échange de colonne selon la revendication 4, dans lequel
une pompe d'alimentation en liquide (2) est configurée pour être arrêtée lorsque la pression dans une colonne après l'échange de colonne n'atteint pas une pression prédéterminée.

8. Mécanisme d'échange de colonne selon la revendication 4, dans lequel
une marque d'identification est ajoutée à la colonne, et des données de colonne précédentes sont référencées.

9. Mécanisme d'échange de colonne selon la revendication 8, dans lequel
lorsqu'il existe un historique d'utilisation dans la colonne, le mécanisme d'échange de colonne est adapté pour amener un avertissement à être affiché lorsque la pression ne tombe pas dans une plage prédéterminée sur la base de la pression d'utilisation de la colonne.

10. Mécanisme d'échange de colonne selon la revendication 8, dans lequel
lorsqu'il n'existe pas d'historique d'utilisation dans une colonne, le mécanisme d'échange de colonne est adapté pour amener un avertissement à être affiché lorsque la pression ne tombe pas dans une plage prédéterminée en se référant à des données de plage de pression qui sont définies sur la base d'un type de colonne et d'une taille de colonne.

11. Mécanisme d'échange de colonne selon la revendication 4, dans lequel
le mécanisme d'échange de colonne est adapté pour amener une analyse à être démarrée après confirmation que la température dans la colonne (5) atteint une température prédéterminée ou que la température dans la colonne (5) atteint une température prédéterminée et est maintenue pendant un temps prédéterminé.

12. Mécanisme d'échange de colonne selon la revendication 4, dans lequel
la pression dans la colonne (5) est surveillée avec un manomètre, et la colonne est détachée après que la pression de colonne est réduite.
